# FASCICULE DE BREVET EUROPEEN

(11) **EP 1 961 224 B1**
(45) Date de publication et mention de la délivrance du brevet: **24.02.2010**
(21) Numéro de dépôt: 06830594.5
(22) Date de dépôt: 13.12.2006
(51) Int. Cl.: H04N 7/167

(54) **PROCEDE DE CHIFFREMENT ET DE DECHIFFREMENT D'UN CONTENU A ACCES CONDITIONNEL**
VERFAHREN ZUM VERSCHLÜSSELN UND ENTSCHLÜSSELN EINES INHALTS MIT ZUGANGSKONTROLLE
METHOD FOR ENCRYPTING AND DECRYPTING A CONDITIONAL ACCESS CONTENT

(30) Priorité: 15.12.2005 EP 05292701
(43) Date de publication de la demande: 27.08.2008
(73) Titulaire: NAGRA FRANCE SAS, 75015 Paris (FR)
(72) Inventeur: LELEGARD, Thierry, F-75015 Paris (FR); JUNOD, Pascal, CH-1302 Vufflens-la-Ville (CH)
(74) Mandataire: Leman Consulting S.A.
(86) Numéro de dépôt international: PCT/EP2006/069660
(87) Numéro de publication internationale: WO 2007/068720

(56) Documents cités:
- EP-A- 1 143 722
- "European Broadcasting Union Union Europ #233;enne de Radio-T #233;l #233;vision Digital Video Broadcasting (DVB); Support for use of scrambling and Conditional Access (CA) within digital broadcasting systems; ETR 289" ETSI STANDARDS, EUROPEAN TELECOMMUNICATIONS STANDARDS INSTITUTE, SOPHIA-ANTIPO, FR, vol. BC, octobre 1996 (1996-10), XP014011415 ISSN: 0000-0001

## Description

### DOMAINE TECHNIQUE

La présente invention concerne un procédé de chiffrement et de déchiffrement d'un contenu à accès conditionnel dans lequel ce contenu est envoyé sous la forme de paquets de données.

Ce procédé s'applique notamment à la télévision à péage, mais également à d'autres configurations dans lesquelles des données sont envoyées sous forme chiffrée. Ces données pourraient notamment concerner des transactions financières, des logiciels, des jeux ou un contenu musical par exemple ou des informations telles que des informations boursières, des prévisions météorologiques ou similaires.

### TECHNIQUE ANTERIEURE

Dans un certain nombre d'applications, en particulier dans le domaine de la télévision à péage, des données formant un contenu sont envoyées sous la forme de paquets de données. Ces paquets peuvent en particulier avoir une longueur fixe prédéfinie. Ces paquets sont généralement diffusés sous forme chiffrée à destination d'un ensemble de récepteurs tel que des décodeurs.

En parallèle aux paquets de données, des informations de déchiffrement sont également diffusées. Ces informations contiennent en particulier des clés de déchiffrement ou des données permettant de déterminer les clés nécessaires. Afin de garantir une certaine sécurité des systèmes de données à accès conditionnel, il est impératif que les clés soient changées après un certain temps d'utilisation ou de validité. En pratique, dans le cas particulier de la télévision à péage, une clé pourrait être utilisée pour accéder à quelques secondes, voire quelques minutes d'un contenu télévisuel. L'une des contraintes liées au changement de clé est la nécessité d'associer la bonne clé de déchiffrement à chaque paquet de données, faute de quoi ces données ne sont pas accessibles. Il est toutefois pratiquement impossible de synchroniser les données avec les informations de déchiffrement, en particulier à cause du fonctionnement interne des systèmes.

Pour cette raison, il est nécessaire de disposer d'un mécanisme qui permette d'associer chaque paquet de données à la clé de déchiffrement correspondante, sans pouvoir synchroniser ces deux éléments.

Selon une forme de réalisation connue, les paquets de données contiennent généralement un marqueur de valeur connue qui permet au récepteur/décodeur de repérer le début d'un paquet et de traiter ce paquet en conséquence.

Selon les normes utilisées pour le formatage de ces paquets, la longueur d'un paquet est fixe et il n'est pas possible d'ajouter des informations supplémentaires à celles qui sont déjà existantes. Cela signifie en particulier que lorsque la clé de chiffrement d'un paquet est modifiée, il n'est pas possible d'indiquer ce changement de clé dans le paquet, par exemple au moyen d'informations de changement de clé. Il est à noter que le changement des clés n'est pas synchronisé avec les paquets, de sorte qu'une clé peut servir à chiffrer et à déchiffrer plusieurs paquets.

En pratique, à réception d'un paquet, on déchiffre celui-ci avec la clé courante. On vérifie ensuite si le résultat du déchiffrement est utilisable, c'est-à-dire s'il contient le marqueur. Si tel n'est pas le cas, on déchiffre le même paquet avec la clé suivante. Si le résultat de ce déchiffrement est utilisable et contient donc le marqueur, la nouvelle clé est utilisée pour le déchiffrement. Si le résultat de ce déchiffrement ne contient pas le marqueur, on génère un message d'erreur.

Ce mode de réalisation présente un inconvénient important. En effet, il arrive que le déchiffrement d'un paquet avec la clé courante donne un résultat contenant bel et bien le marqueur, alors que ce paquet a été chiffré avec une autre clé que la clé courante. Ce résultat dû au hasard se produit selon une fréquence non négligeable et empêche un utilisateur d'accéder au contenu même s'il en a les droits.

La présente invention se propose de pallier cet inconvénient en réalisant un procédé dans lequel le déchiffrement par une clé, d'un paquet chiffré par une autre clé différente ne contient jamais le marqueur. Ainsi, il n'est pas possible de confondre deux clés de chiffrement et l'accès au contenu est ainsi toujours assuré.

### EXPOSE DE L'INVENTION

Le but de l'invention est atteint par un procédé de chiffrement et de déchiffrement d'un contenu à accès conditionnel, dans lequel ledit contenu est diffusé sous forme de paquets de données, les paquets précédents étant chiffrés par une première clé associée à une première valeur de remplissage et à un premier élément de remplissage chiffré et les paquets suivants étant chiffrés par une seconde clé associée à une seconde valeur de remplissage et à un second élément de remplissage chiffré, dans lequel au moins ladite première clé et ladite première valeur de remplissage forment un premier jeu de paramètres de chiffrement, ce procédé comportant les étapes suivantes :
a) extraction à partir d'un paquet de données, d'un marqueur;
b) création d'un premier bloc de marquage comportant d'une part ledit marqueur et d'autre part la seconde valeur de remplissage;
c) chiffrement dudit premier bloc de marquage avec la seconde clé de chiffrement;
d) extraction d'une seconde valeur de marquage chiffrée dudit premier bloc de marquage chiffré;
e) création d'un bloc de marquage mixte comportant d'une part ladite seconde valeur de marquage chiffrée et d'autre part ledit premier élément de remplissage chiffré;
f) déchiffrement dudit bloc de marquage mixte au moyen de la première clé de chiffrement, de manière à obtenir un bloc de marquage mixte déchiffré;
g) extraction d'une partie prédéterminée du bloc de marquage mixte déchiffré
h) comparaison de cette partie extraite avec une valeur de référence;
i) si la comparaison aboutit à une identité, détermination d'un nouveau jeu de paramètres de chiffrement différent du premier jeu de paramètres de chiffrement et réitération des étapes b) à h) dans lesquelles ledit second jeu de paramètres de chiffrement est remplacée par ledit nouveau second jeu de paramètres de chiffrement.

Dans un système de télévision à péage utilisant le procédé de l'invention, les paquets de données peuvent être diffusés à destination d'un groupe de récepteurs, envoyés sous forme point à point ou être stockés sur un support physique tel qu'un disque dur par exemple. Les informations de déchiffrement peuvent également être diffusées, envoyées point à point ou stockées. Généralement, le dispositif de déchiffrement à l'intérieur du récepteur ou du décodeur dispose simultanément de deux informations de déchiffrement. Dans le cas où ces informations sont mémorisées dans une mémoire du décodeur, elles sont transmises au dispositif de déchiffrement de telle sorte qu'il ne dispose également que de deux informations à la fois, les autres restant mémorisées pour un usage ultérieur. Si ces informations sont les clés de déchiffrement, il dispose en générale de la clé actuelle et de la clé suivantes c'est-à-dire de la clé ayant servi à chiffrer le paquet en cours de visualisation et de la clé ayant servi à chiffrer le prochain paquet utilisant une clé différente de la clé actuelle.

Bien que le paquet de données, par sa structure et les contraintes liées à la norme utilisée ne permette pas d'inclure des informations de changement de clé, le procédé de l'invention permet de déterminer pour quel paquet la clé suivante doit être utilisée.

En effet, dans l'invention, pendant que l'on accède à un paquet de données, le paquet suivant est déchiffré avec la clé courante. Dans ce paquet déchiffré, on détermine si un marqueur est contenu. Si tel n'est pas le cas, on utilise la clé suivante pour déchiffrer le paquet de données. Si cette clé suivante a été utilisée pour chiffrer ce paquet, on utilise alors cette clé, qui devient la nouvelle clé courante. Une autre clé suivante est alors chargée.

Si après déchiffrement du paquet avec la clé courante, on retrouve le marqueur, on peut supposer que la clé courante est celle qui a servi à chiffrer le paquet en question. Toutefois, pour éviter que ce marqueur soit présent par hasard alors que la clé suivante a été utilisée pour chiffrer le paquet considéré, au moment du chiffrement, on effectue un test. Ce test a pour objectif de s'assurer qu'il est impossible de retrouver le marqueur après déchiffrement par une certaine clé, d'un paquet ayant été chiffré par une autre clé "temporellement adjacente", c'est-à-dire suivante ou précédente.

Ceci ne peut pas être garanti par les procédés de l'art antérieur. En effet, comme indiqué précédemment, un paquet de données contient notamment un marqueur et une partie utile, le marqueur étant fixe et la partie utile étant variable. Comme cette partie utile est variable, il n'est jamais possible de garantir que si l'on chiffre le paquet avec une clé, puis que l'on déchiffre ce paquet avec une autre clé, le paquet obtenu ne contienne pas le marqueur.

Dans cette invention, grâce au test, on peut être sûr que si l'on retrouve le marqueur dans le paquet déchiffré, c'est que le déchiffrement a été effectué avec la bonne clé.

### DESCRIPTION SOMMAIRE DES DESSINS

La présente invention et ses avantages seront mieux compris en référence aux figures annexées et à la description détaillée d'un mode de réalisation particulier, dans lesquelles :
- les figures 1a à 1g illustre schématiquement le chiffrement d'un paquet de données selon le procédé de l'invention;
- la figure 2 illustre un premier mode de réalisation de la vérification de paramètres utilisés pour le chiffrement;
- la figure 3 illustre un deuxième mode de réalisation de la vérification de paramètres utilisés pour le chiffrement;
- les figures 4a à 4g représentent le déchiffrement d'un bloc de données au moyen de la clé correcte; et
- les figures 5a à 5d illustrent le déchirement d'un bloc au moyen d'une fausse clé.

### MEILLEURE MANIERE DE REALISER L'INVENTION

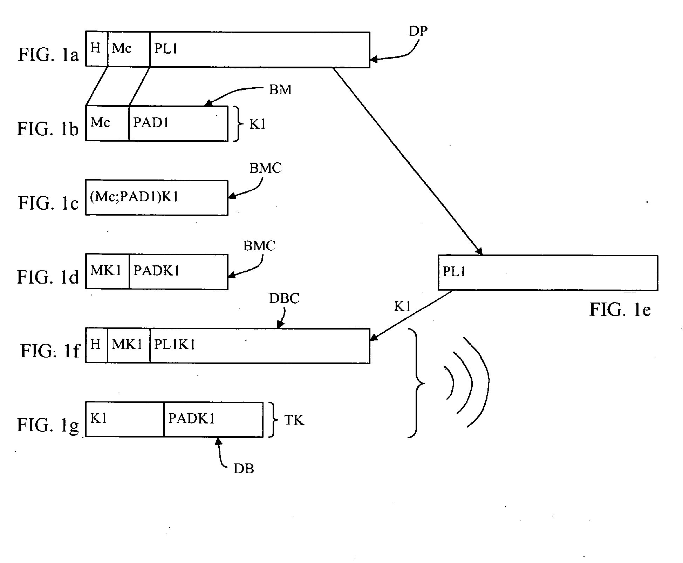

En référence aux figures 1a à 1g, le contenu diffusé est transmis sous la forme de paquets de données DP. Chaque paquet de données est formé d'un en-tête H en clair, d'un marqueur Mc et d'une partie utile PL. L'en-tête H contient des informations de service ainsi qu'un indicateur de début de paquet. Selon un mode de réalisation concret, il est formé de 4 octets et reste toujours en clair. Le marqueur Mc est constant dans tous les paquets. En pratique, il est généralement formé de trois octets dont les deux premiers ont la valeur 0 et le troisième la valeur 1. Sur les figures, la partie utile PL porte la référence 1 pour le premier paquet. Elle est formée des données à accès conditionnel proprement dites, c'est-à-dire des données audio ou vidéo par exemple dans le cas de la diffusion de contenus de télévision à péage ou de musique. La taille du paquet de données DP complet est fixe et ne doit pas être modifiée. En pratique, elle peut par exemple être de 188 octets.

En appliquant le procédé de l'invention, dans un premier temps, on extrait du premier paquet de données DP, le marqueur Mc. On forme ensuite un bloc, dénommé premier bloc de marquage BM. Ce bloc de marquage comporte d'une part le marqueur Mc et d'autre part une première valeur de remplissage PAD1. Cette valeur de remplissage peut être choisie de façon aléatoire, parmi une liste prédéterminée ou être constante. L'importance de cette valeur de remplissage est décrite en détails ci-dessous.

Dans le procédé de l'invention, on utilise généralement un algorithme de chiffrement par blocs. Dans ce type d'algorithmes, la taille des blocs utilisés est fixe et peut être par exemple 8 ou 16 octets, bien que d'autres valeurs soient possibles. Cette taille est appelée taille de chiffrement dans la suite du texte. La taille de la première valeur de remplissage PAD1 est telle que la taille du bloc de marquage BM est égale à la taille de chiffrement.

Le bloc de marquage BM est ensuite chiffré avec la première clé de chiffrement K1 de façon à obtenir un bloc de marquage chiffré BMC. Celui-ci est tronqué en deux parties, l'une des parties ayant la taille du marqueur Mc et l'autre partie ayant la taille restante. La partie ayant la taille du marqueur est référencée par MK1 sur la figure 1d et est dénommée valeur de marquage chiffrée. L'autre partie est référencée par PADK1 et est dénommée élément de remplissage chiffré. L'endroit où le bloc de marquage chiffré est tronqué dépend de la taille du marqueur et de son emplacement. Ainsi, si le marqueur a une taille de trois octets et est placé au début du bloc de marquage, la valeur de marquage chiffrée aura également une taille de trois octets et sera prélevée au début du bloc de marquage chiffré. Il est toutefois bien clair que normalement, la valeur de marquage chiffrée MK1 ne correspond pas au marqueur Mc auquel on applique la première clé de chiffrement K1. De manière similaire, l'élément de remplissage chiffré PADK1 ne correspond pas à la première valeur de remplissage PAD à laquelle on applique la première clé de chiffrement K1.

La partie utile PL1 contenue dans le premier paquet de données est chiffrée au moyen de la première clé de chiffrement K1, en utilisant par exemple également le procédé de chiffrement par blocs, de façon à obtenir la partie utile chiffrée PL1 K1.

Le marqueur Mc du paquet DP d'origine est remplacé par la valeur de marquage chiffrée MK1 obtenu dans l'étape précédente. De même, la partie utile PL1 est remplacée par la partie utile chiffrée PL1K1. Ce nouveau bloc a nécessairement la taille du bloc d'origine. Il est dénommé bloc de données chiffré DBC. Il est clair que le bloc de données chiffré ne correspond normalement pas au paquet de données DP auquel on aurait appliqué la première clé de chiffrement K1.

On forme également un autre bloc, dénommé bloc de déchiffrement DB, comprenant au moins la première clé K1 et l'élément de remplissage chiffré PADK1.

Le bloc de données chiffré DBC et le bloc de déchiffrement DB sont traités de façon conventionnelle en vue de leur diffusion, c'est-à-dire que le bloc de déchiffrement est généralement chiffré par une clé de transmission TK et formatés pour être envoyés dans un message de contrôle ECM à destination des récepteurs concernés. Le bloc de données chiffré est également diffusé à destination de ces récepteurs.

Comme indiqué précédemment, le procédé de l'invention permet de garantir que l'on ne pourra jamais confondre une clé ayant servi au chiffrement de paquets de données avec une autre clé ayant servi pour un autre paquet de données.

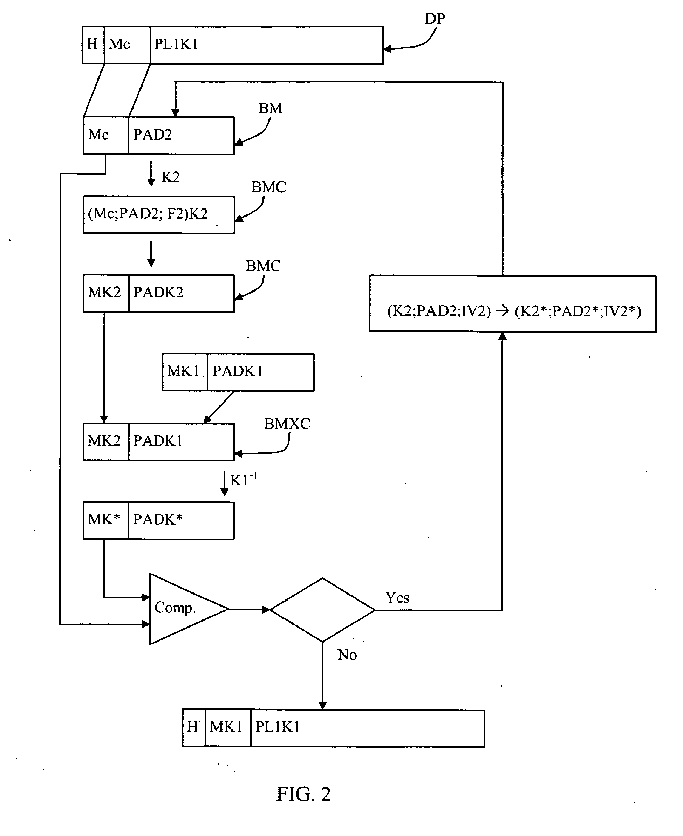

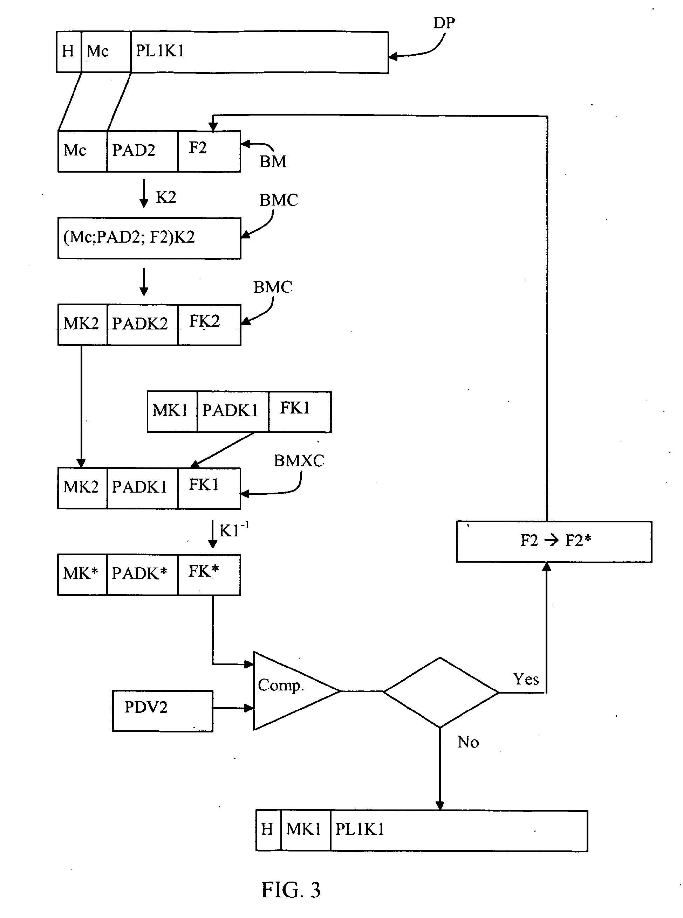

Les figures 2 et 3 illustrent deux manières de s'assurer qu'une confusion des clés n'est pas possible.

En référence à la figure 2, imaginons que les paquets de données précédents ont été chiffrés au moyen d'une première clé de chiffrement K1 et les paquets suivants sont chiffrés au moyen de la clé K2.

Comme indiqué en référence aux figures 1a à 1g et en particulier à la figure 1b, lors de la préparation des données en vue de leur diffusion, on choisit une valeur de remplissage PAD1 pour former un bloc de marquage BM comprenant le marqueur Mc et la valeur de remplissage PAD1.

On chiffre ensuite le bloc de marquage avec la première clé de chiffrement K1. On obtient un bloc de marquage chiffré BMC. Celui-ci est ensuite séparé en deux blocs, l'un contenant la valeur de marquage chiffrée MK1. et l'autre, l'élément de remplissage chiffré PADK1, comme illustré par la figure 1d. Cet élément de remplissage chiffré PADK1 est mémorisé de sorte que, lors de l'étape de vérification, il n'est pas recalculé, mais simplement extrait de la mémoire.

Lors de cette étape de vérification, on extrait le marqueur Mc d'un paquet de données, puis l'on ajoute une seconde valeur de remplissage PAD2 à ce marqueur de façon à former un bloc de marquage ayant la taille du paquet de données. Ce bloc de marquage est chiffré avec la seconde clé de chiffrement K2 et forme un bloc de marquage chiffré. Celui-ci est tronqué de façon à former une seconde valeur de marquage chiffrée MK2 et un second élément de remplissage chiffré PADK2. La seconde valeur de marquage chiffrée MK2 a la taille du marqueur et le second élément de remplissage chiffré PADK2 représente le solde du bloc.

On forme ensuite un nouveau bloc, dénommé bloc de marquage mixte chiffré BMXC, à partir de la seconde valeur de marquage chiffrée MK2 et du premier élément de remplissage chiffré PADK1. Comme indiqué précédemment, ce premier élément de remplissage chiffré est déjà connu, puisqu'il a été formé lors d'une étape précédente.

Ce bloc de marquage mixte chiffré est déchiffré avec la clé utilisée précédemment, à savoir la première clé de chiffrement K1. Le bloc obtenu est tronqué de façon à former une première partie MK* ayant la longueur du marqueur et une deuxième partie PADK* représentant le solde du bloc. Cette première partie est comparée au marqueur Mc. Si la comparaison indique que ces valeurs sont différentes, le procédé continue comme cela est expliqué en référence aux figures 1 a à 1g.

Si au contraire, la comparaison indique que les valeurs MK*; Mc sont identiques, ce qui peut arriver par hasard et pose des problèmes lors de l'utilisation du système, il est nécessaire de changer au moins un paramètre ayant servi au chiffrement.

Lors de l'utilisation d'un algorithme de chiffrement par blocs dans un procédé tel que décrit ci-dessus, les paramètres utilisés sont la seconde valeur de remplissage PAD2, la seconde clé de chiffrement K2 ainsi qu'éventuellement un vecteur d'initialisation. Ce vecteur d'initialisation est bien connu en soi et n'est pas décrit en détail ci-dessous. Sa fonction est notamment expliquée dans "Cryptographie appliquée" de Bruce Schneier, 2ème édition, §9.3.

Dans le cas où le paramètre modifié est la valeur de remplissage, cette seconde valeur de remplissage PAD2 sera remplacée par une nouvelle seconde valeur de remplissage notée PAD2*. Si les valeurs de remplissage sont déterminées aléatoirement, cela ne pose pas de problèmes. Si elles sont choisies parmi une liste, il suffit de prendre un autre élément de la liste. Si cette valeur de remplissage est fixe, il est nécessaire pour ces cas particuliers de prendre une autre valeur de remplissage que cette valeur fixe. Pour ceci, il est donc nécessaire de prévoir les mécanismes qui permettent de changer de valeur de remplissage, même si ces valeurs sont généralement fixes.

Lorsqu'une nouvelle seconde valeur de remplissage a été déterminée, elle est de nouveau testée jusqu'à ce que l'on arrive dans une configuration dans laquelle la valeur de marquage déchiffrée MK* est différente du marqueur Mc.

Selon une variante, il est également possible de garder la même valeur de remplissage et de changer la clé. En fait, il est nécessaire de changer au moins l'une des valeurs des paramètres cités ci-dessus. Il est également possible de changer toutes les valeurs, par exemple en tirant au hasard un nouveau jeu des paramètres utilisés, à savoir une seconde valeur de remplissage, une seconde clé et un vecteur d'initialisation.

Selon une variante, illustrée par la figure 3, on ne teste pas le marqueur Mc, mais une autre valeur de référence. Au lieu d'utiliser la seconde valeur de remplissage PAD2 telle que définie dans cette figure 2, on utilise en outre une seconde valeur fixe F2 telle que le marqueur Mc, la valeur de remplissage PAD2 et la valeur fixe F2 ont une longueur égale à la taille de chiffrement.

La procédure de vérification se déroule comme indiqué dans le mode de réalisation précédent jusqu'à l'obtention du bloc de marquage mixte déchiffré par la première clé de chiffrement K1. Ce bloc de marquage mixte déchiffré est tronqué en trois parties, à savoir une première partie MK* de la taille du marqueur, une partie intermédiaire PADK* et une troisième partie FK* de la taille de la valeur fixe F2. En connaissant la première valeur de remplissage PAD1, la première valeur fixe F1 et la première clé de chiffrement K1, on peut déterminer la valeur qui devrait être obtenue pour la troisième partie FK* du bloc de marquage mixte déchiffré, cette valeur étant dénommée valeur prévisible de référence PDV2. Dans cette variante, si la troisième partie FK* est égale à la valeur prévisible de référence PDV2, on change la seconde valeur fixe F2 ou la clé ou un vecteur d'initialisation, jusqu'à ce que la comparaison indique une différence de valeurs.

Ce mode de réalisation indique qu'il n'est pas nécessaire d'effectuer la comparaison sur une valeur identique pour tous les paquets de données. Il suffit en effet d'appliquer cette méthode sur des valeurs connues en clair dont le traitement donne un résultat prévisible.

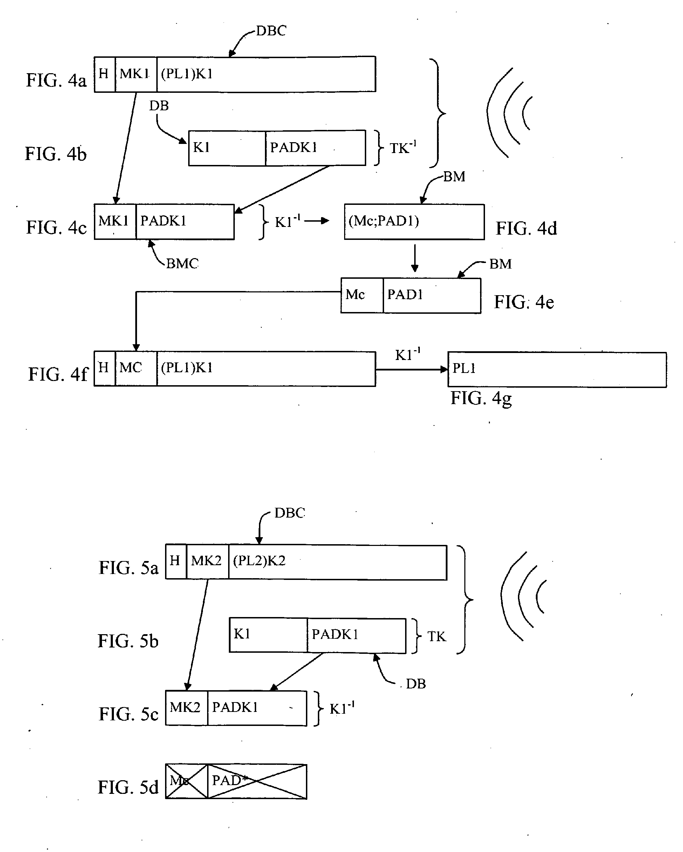

Les figures 4a à 4g décrivent le déchiffrement d'un paquet de données DP au moyen de la clé K1 qui a servi à chiffrer ce paquet.

Comme indiqué en référence aux figures 1f et 1g, le récepteur/décodeur reçoit d'une part le bloc de données chiffré DBC et d'autre part le bloc de déchiffrement DB, ce dernier bloc étant chiffré par la clé de transmission TK.

Dans un premier temps, le décodeur utilise la clé de transmission TK pour extraire le bloc de déchiffrement. A partir de la valeur de marquage chiffrée MK1 et de l'élément de remplissage chiffré PADK1, on reconstitue le bloc de marquage chiffré BMC. Grâce à la connaissance de la première clé K1, provenant du bloc de déchiffrement, il est possible de déchiffrer le bloc de marquage chiffré et d'obtenir le bloc de marquage.

Ce bloc de marquage est ensuite tronqué de façon à obtenir un bloc ayant la longueur du marqueur Mc. Ce bloc est testé pour vérifier s'il est égal au marqueur Mc ou non:

Comme nous sommes partis de l'hypothèse que la première clé K1 pour le chiffrement est également celle utilisée pour le déchiffrement, le bloc obtenu précédemment contiendra bien le marqueur Mc. Cette caractéristique permet justement de s'assurer que la clé de déchiffrement est encore valable pour le paquet de données actuellement traité.

Grâce à ce marqueur Mc, on peut reconstituer le paquet d'origine en remplaçant la valeur de marquage chiffrée MK1 dans le bloc de données chiffré par le marqueur Mc. On obtient ainsi le paquet de données DP d'origine dont on extrait la partie utile PL1K1 chiffrée. Celle-ci est ensuite déchiffrée au moyen de la première clé K1 de façon à obtenir la partie utile PL1 qui est ensuite traitée de façon conventionnelle pour accéder au contenu requis.

La suite de la description concerne le cas où la clé de chiffrement utilisée est une deuxième clé de chiffrement K2 et où l'on utilise la première clé de chiffrement K1 pour essayer d'accéder aux données. Ce cas est traité ci-dessous en référence aux figures 5a à 5d.

Comme indiqué précédemment, le décodeur reçoit un bloc de données chiffré DBC et un bloc de déchiffrement DB, ce bloc de déchiffrement étant lui-même chiffré par la clé de transmission TK. Ce bloc est d'abord déchiffré grâce à la clé de transmission connue du décodeur. Le décodeur peut ensuite former, comme dans la figure 4b, un bloc de marquage chiffré comprenant la valeur de marquage chiffrée MK2 et l'élément de remplissage chiffré PADK1.

Ce décodeur déchiffre ensuite ce bloc avec sa clé actuelle, à savoir la première clé de chiffrement K1. Le résultat est tronqué à la longueur du marqueur Mc, puis comparé à ce marqueur. Comme la clé K2 utilisée pour le chiffrement est différente de la première clé K1 utilisée pour le déchiffrement, la partie tronquée MK2 du bloc sera différente du marqueur Mc.

De plus, comme indiqué en référence à la figure 2, la valeur de remplissage PAD1 est choisie et vérifiée de telle sorte qu'il est impossible que la partie tronquée du bloc soit égale au marqueur.

De cette manière, le changement de clé sera inévitablement détecté par le décodeur. Comme l'utilisation de la première clé K1 ne donne pas le résultat escompté, à savoir le marqueur Mc, il utilisera la clé suivante, soit la deuxième clé de chiffrement K2. De cette manière, on se retrouve dans le cas illustré par les figures 4a à 4g, en remplaçant la première clé de chiffrement K1 par la deuxième clé de chiffrement K2, ce qui permettra de retrouver le marqueur Mc et d'accéder ainsi à la partie utile PL. Il est à noter que, généralement, si l'utilisation de cette nouvelle clé ne donne pas non plus le résultat escompté, c'est-à-dire le marqueur, on générera un message d'erreur.

Dans la description ci-dessus, il est indiqué que le dispositif de décodage proprement dit contient deux clés, à savoir la clé courante et la clé suivante. Selon une variante, il pourrait également en contenir plus, par exemple 5, inscrites dans un registre à décalage. Dans ce cas, lorsque la première clé n'est plus utilisable, elle est éliminée et la deuxième clé prend sa place. La 5^{ème} clé prend la 4^{ème} place et une nouvelle clé est introduite en 5^{ème} position.

Les clés utilisées dans la présente invention peuvent être de type symétrique ou asymétrique. Dans le cas d'une clé symétrique, la même clé est utilisée pour chiffrer que pour déchiffrer. Dans le cas d'une clé asymétrique, la clé utilisée pour chiffrer des données est différente de la clé permettant de les déchiffrer. Ainsi, dans la description ci-dessus, lorsqu'il est indiqué que le déchiffrement est effectué avec la première clé K1 par exemple, il faut comprendre qu'en cas d'utilisation de clés asymétriques, ce déchiffrement est effectué avec la clé de la paire de clés qui n'a pas été utilisée pour le chiffrement.

Bien que cela ne soit pas représenté explicitement sur les figures, lorsque l'on utilise un vecteur d'initialisation dans le cadre du chiffrement par blocs, ce vecteur est également transmis au décodeur dans le bloc de déchiffrement de telle façon que ce vecteur soit également disponible lors du déchiffrement.

## Revendications

1. Procédé de chiffrement et de déchiffrement d'un contenu à accès conditionnel, dans lequel ledit contenu est diffusé sous forme de paquets de données (DP), les paquets précédents étant chiffrés par une première clé (K1) associée à une première valeur de remplissage (PAD1) et à un premier élément de remplissage chiffré (PADK1) et les paquets suivants étant chiffrés par une seconde clé (K2) associée à une seconde valeur de remplissage (PAD2) et à un second élément de remplissage chiffré (PADK2), dans lequel au moins ladite première clé (K1) et ladite première valeur de remplissage (PAD1) forment un premier jeu de paramètres de chiffrement et dans lequel au moins ladite seconde clé (K2) et ladite seconde valeur de remplissage forment un second jeu de paramètres de chiffrement, ce procédé comportant les étapes suivantes :
a) extraction à partir d'un paquet de données (DP), d'un marqueur (Mc);
b) création d'un premier bloc de marquage comportant d'une part ledit marqueur (Mc) et d'autre part la seconde valeur de remplissage (PAD2);
c) chiffrement dudit premier bloc de marquage avec la seconde clé de chiffrement (K2);
d) extraction d'une seconde valeur de marquage chiffrée (MK2) dudit premier bloc de marquage chiffré;
e) création d'un bloc de marquage mixte comportant d'une part ladite seconde valeur de marquage chiffrée (MK2) et d'autre part ledit premier élément de remplissage chiffré (PADK1);
f) déchiffrement dudit bloc de marquage mixte au moyen de la première clé de chiffrement (K1), de manière à obtenir un bloc de marquage mixte déchiffré;
g) extraction d'une partie prédéterminée du bloc de marquage mixte déchiffré
h) comparaison de cette partie extraite avec une valeur de référence (Mc; PDV2);
i) si la comparaison aboutit à une identité, détermination d'un nouveau jeu de paramètres de chiffrement différent du premier jeu de paramètres de chiffrement et réitération des étapes b) à h) dans lesquelles ledit second jeu de paramètres de chiffrement est remplacé par ledit nouveau second jeu de paramètres de chiffrement.

2. Procédé selon la revendication 1, **caractérisé en ce que** le jeu de paramètres de chiffrement comprend en outre un vecteur d'initialisation.

3. Procédé selon la revendication 1 ou 2, **caractérisé en ce que** ledit nouveau jeu de paramètres de chiffrement diffère dudit premier jeu de paramètres de chiffrement par au moins l'un desdits paramètres.

4. Procédé selon la revendication 1, **caractérisé en ce que** lors de l'étape h), la comparaison de la partie extraite est faite par rapport au marqueur (Mc).

5. Procédé selon la revendication 1, **caractérisé en ce que** lors de l'étape h), la comparaison de la partie extraite est faite par rapport à une valeur connue égale à une partie extraite de la seconde valeur de remplissage (PAD2).

6. Procédé selon la revendication 1, **caractérisé en ce que** la taille du bloc de marquage formée du marqueur (Mc) et de ladite première ou deuxième valeur de remplissage (PAD1; PAD2) est égale à une taille compatible avec un algorithme de chiffrement par blocs utilisés dans ce procédé.

7. Procédé selon la revendication 1, **caractérise en ce que** ladite partie (MK1) du bloc de marquage mixte déchiffré extraite de ce bloc a une taille égale à la taille du marqueur (Mc).

8. Procédé selon la revendication 1, **caractérisé en ce qu'**il comporte en outre les étapes suivantes :
- création d'un premier bloc de marquage comportant d'une part ledit marqueur (Mc) et d'autre part une première valeur de remplissage (PAD1);
- chiffrement dudit bloc de marquage avec la première clé (K1);
- extraction d'une première valeur de marquage chiffrée (MK1) dudit bloc de marquage chiffré;
- remplacement, dans le paquet de données (DP) du marqueur (Mc) par ladite partie (MK1) du bloc de marquage chiffré extraite de ce bloc; cette partie étant dénommée valeur de marquage chiffrée, le résultat de ce remplacement étant dénommé bloc de données chiffré;
- création d'un bloc de déchiffrement formé au moins d'une part par ladite première clé de chiffrement (K1) et d'autre part par ledit élément de remplissage chiffré. (PADK1), cet élément de remplissage chiffré étant formé par ledit bloc de marquage chiffré auquel a été retirée la valeur de marquage chiffrée (MK1);

9. Procédé selon la revendication 8, **caractérisé en ce que** ledit bloc de données chiffré et ledit bloc de déchiffrement sont transmis à au moins un récepteur, ledit bloc de déchiffrement étant en outre chiffré par une clé de transmission (TK).

10. Procédé de déchiffrement selon la revendication 9, **caractérisé en ce qu'**il comporte les étapes suivantes :
a) réception dudit bloc de données chiffré et dudit bloc de déchiffrement et déchiffrement du bloc de déchiffrement au moyen de la clé de transmission (TK);
b) création du bloc de marquage chiffré par extraction de la valeur de marquage chiffrée (MK1) provenant du bloc de données chiffré et par extraction de l'élément de remplissage chiffré (PADK1) provenant du bloc de déchiffrement;
c) déchiffrement du bloc de marquage chiffré au moyen d'une clé courante (K1);
d) extraction d'une partie prédéterminée du bloc de marquage obtenu lors dudit déchiffrement du bloc de marquage chiffré;
e) comparaison de cette partie prédéterminée du bloc de marquage avec une valeur de référence (Mc; PDV2);
f) en cas d'identité, remplacement de la valeur de marquage chiffrée (MK1) du bloc de données chiffré par ledit marqueur (Mc);
g) extraction, déchiffrement et utilisation de la partie utile (PL);
h) en cas de non-identité lors de ladite comparaison, déchiffrement du bloc de marquage chiffré au moyen d'une clé suivante (K2);
i) extraction d'une partie prédéterminée du bloc de marquage obtenu lors dudit déchiffrement du bloc de marquage avec cette nouvelle clé (K2);
j) comparaison de cette partie du bloc de marquage avec ladite valeur de référence (Mc; PDV2);
k) en cas d'identité, remplacement de la valeur de marquage chiffrée (MK1) du bloc de données chiffré par ledit marqueur (Mc);
l) extraction, déchiffrement et utilisation de la partie utile (PL);

11. Procédé selon la revendication 10, **caractérisé en ce que**, en cas de non-identité après déchiffrement avec ladite clé suivante (K2), génération d'un message d'erreur.

12. Procédé selon la revendication 10, **caractérisé en ce que** la comparaison de la partie prédéterminée extraite est faite par rapport au marqueur (Mc).

13. Procédé selon la revendication 10, **caractérisé en ce que** la comparaison de la partie prédéterminée extraite est faite par rapport à une valeur connue égale à une partie extraite de la première valeur de remplissage (PAD1).

14. Procédé selon la revendication 11, **caractérisé en ce que** la taille du bloc extrait du bloc de marquage chiffré est égale à la taille du marqueur (Mc).

15. Procédé selon la revendication 1, **caractérisé en ce que** deux clés sont mémorisées, l'une ayant la fonction de clé actuelle et l'autre la fonction de clé suivante.

16. Procédé selon la revendication 1, **caractérisé en ce que** plusieurs clés sont mémorisées et associées à un ordre d'utilisation.

## Claims

1. Encryption and decryption method for conditional access content, in which said content is broadcast in the form of data packets (DP), the previous packets being encrypted by a first key (K1) associated to a first padding value (PAD1) and to a first encrypted padding element (PADK1) and the following packets being encrypted by a second key (K2) associated to a second padding value (PAD2) and to a second encrypted padding element (PADK2), in which at least said first key (K1) and said first padding value (PAD1) form a first set of encryption parameters and in which at least said second key (K2) and said second padding value form a second set of encryption parameters, this method comprising the following steps:
a) extraction of a marker (Mc) from a data packet (DP);
b) creation of a first marking block including on one hand said marker (Mc) and on the other hand the second padding value (PAD2);
c) encryption of said first marking block with the second encryption key (K2);
d) extraction of a second encrypted marking value (MK2) of said first encrypted marking block;
e) creation of a mixed marking block including on one hand said second encrypted marking value (MK2) and on the other hand said first encrypted padding element (PADK1);
f) decryption of said mixed marking block by means of the first encryption key (K1), in order to obtain a decrypted mixed marking block;
g) extraction of a predetermined part of the decrypted mixed marking block;
h) comparison of this extracted part with a reference value (Mc; PDV2);
i) if the comparison leads to an identity, determination of a new set of encryption parameters different from the first set of encryption parameters and repetition of the steps b) to h) in which said second set of encryption parameters is replaced by said new second set of encryption parameters.

2. Method according to claim 1, **characterised in that** the set of encryption parameters also includes an initialisation vector.

3. Method according to claim 1 or 2, **characterized in that** said new set of encryption parameters is different from said first set of encryption parameters by at least one of said parameters.

4. Method according to claim 1, **characterised in that** during step h), the comparison of the extracted part is made in relation to the marker (Mc).

5. Method according to claim 1, **characterised in that** during the step h), the comparison of the extracted part is made in relation to a known value equal to an extracted part of the second padding value (PAD2).

6. Method according to claim 1, **characterised in that** the size of the marking block formed from the marker (Mc) and said first or second padding value (PAD1; PAD2) is equal to a size compatible with a block encryption algorithm used in this method.

7. Method according to claim 1, **characterised in that** said part (MK1) of the decrypted mixed marking block extracted from this block has a size equal to the size of the marker (Mc).

8. Method according to claim 1, **characterised in that** it also includes the following steps:
- creation of a first marking block including on one hand said marker (Mc) and on the other hand a first padding value (PAD1);
- encryption of said marking block with the first key (K1);
- extraction of a first encrypted marking value (MK1) from said encrypted marking block;
- replacement in the data packet (DP) of the marker (Mc) with said part (MK1) of the encrypted marking block extracted from this block, this part being called encrypted marking value, the result of this replacement being called encrypted data block;
- creation of a decryption block formed at least on one hand by said first encryption key (K1) and on the other hand by said encrypted padding element (PADK1), this encrypted padding element being formed by said encrypted marking block from which has been withdrawn the encrypted marking value (MK1).

9. Method according to claim 8, **characterized in that** said encrypted data block and said decryption block are transmitted to at least one receiver, said decryption block also being encrypted by a transmission key (TK).

10. Decryption method according to claim 9, **characterized in that** it includes the following steps:
a) reception of said encrypted data block and of said decryption block and decryption of the decryption block by means of the transmission key (TK);
b) creation of the encrypted marking block by extraction of the encrypted marking value (MK1) originating from the encrypted data block and by extraction of the encrypted padding element (PADK1) originating from the decryption block;
c) decryption of the encrypted marking block by means of a current key (K1);
d) extraction of a predetermined part of the marking block obtained during said decryption of the encrypted marking block;
e) comparison of this predetermined part of the marking block with a reference value (Mc; PDV2);
f) in case of identity, replacement of the encrypted marking value (MK1) of the encrypted data block with said marker (Mc);
g) extraction, decryption and use of the useful part (PL);
h) in the case that there is no identity at the time of said comparison, decryption of the encrypted marking block by means of a following key (K2);
i) extraction of a predetermined part of the marking block obtained during said decryption of the marking block with this new key (K2);
j) comparison of this part of the marking block with said reference value (Mc; PDV2);
k) in case of identity, replacement of the encrypted marking value (MK1) of the encrypted data block by said marker (Mc);
l) extraction, decryption and use of the useful part (PL);

11. Method according to claim 10, **characterised in that** in the case that there is no identity after decryption with said following key (K2), generation of an error message.

12. Method according to claim 10, **characterised in that** the comparison of the extracted predetermined part is made in relation to the marker (Mc).

13. Method according to claim 10, **characterised in that** the comparison of the extracted predetermined part is made in comparison with a known value equal to an extracted part of the first padding value (PAD1).

14. Method according to claim 11, **characterised in that** the size of the extracted block of the encrypted marking block is equal to the size of the marker (Mc).

15. Method according to claim 1, **characterised in that** two keys are stored, one having the function of the present key and the other having the function of the following key.

16. Method according to claim 1, **characterised in that** several keys are stored and associated to an order of use.

## Patentansprüche

1. Verfahren zum Verschlüsseln und Entschlüsseln eines Inhaltes mit bedingtem Zugriff, bei dem der Inhalt in Gestalt von Datenpaketen (DP) verbreitet wird, wobei die vorangegangenen Pakete durch einen ersten Schlüssel (K1) verschlüsselt worden sind, der einem ersten Füllwert (PAD1) und einem ersten verschlüsselten Füllelement (PADK1) zugeordnet ist, und wobei die nachfolgenden Pakete durch einen zweiten Schlüssel (K2) verschlüsselt sind, der einem zweiten Füllwert (PAD2) und einem zweiten verschlüsselten Füllelement (PADK2) zugeordnet ist, bei dem wenigstens der erste Schlüssel (K1) und der erste Füllwert (PAD1) einen ersten Verschlüsselungsparametersatz bilden und bei dem wenigstens der zweite Schlüssel (K2) und der zweite Füllwert einen zweiten Verschlüsselungsparametersatz bilden, wobei das Verfahren die folgenden Schritte aufweist:
a) ausgehend von einem Datenpaket (DP) Extrahieren eines Markers (Mc),
b) Erzeugen eines ersten Kennzeichnungsblockes, der zum einen den Marker (Mc) und zum anderen den zweiten Füllwert (PAD2) aufweist,
c) Verschlüsseln des ersten Kennzeichnungsblockes mit dem zweiten Verschlüsselungsschlüssel (K2),
d) Extrahieren eines zweiten verschlüsselten Kennzeichnungswertes (MK2) des ersten verschlüsselten Kennzeichnungsblockes,
e) Erzeugen eines gemischten Kennzeichnungsblockes, der zum einen den zweiten verschlüsselten Kennzeichnungswert (MK2) und zum anderen das erste verschlüsselte Füllelement (PADK1) aufweist,
f) Entschlüsseln des gemischten Kennzeichnungsblockes mittels des ersten Verschlüsselungsschlüssels (K1), um einen entschlüsselten gemischten Kennzeichnungsblock zu erhalten,
g) Extrahieren eines vorbestimmten Teiles des entschlüsselten gemischten Kennzeichnungsblockes,
h) Vergleichen dieses extrahierten Teiles mit einem Referenzwert (Mc; PDV2),
i) falls der Vergleich zu einer Übereinstimmung führt, Bestimmen eines neuen Verschlüsselungsparametersatzes, der zu dem ersten Verschlüsselungsparametersatz verschieden ist, und Wiederholen der Schritte b) bis h), bei denen der zweite Verschlüsselungsparametersatz durch den neuen zweiten Verschlüsselungsparametersatz ersetzt worden ist.

2. Verfahren nach Anspruch 1, **dadurch gekennzeichnet, dass** der Verschlüsselungsparametersatz weiterhin einen Initialisierungsvektor aufweist.

3. Verfahren nach Anspruch 1 oder 2, **dadurch gekennzeichnet, dass** sich der neue Verschlüsselungsparametersatz von dem ersten Verschlüsselungsparametersatz durch wenigstens einen Parameter unterscheidet.

4. Verfahren nach Anspruch 1, **dadurch gekennzeichnet, dass** bei dem Schritt h) der Vergleich des extrahierten Teiles in Bezug auf den Marker (Mc) durchgeführt wird.

5. Verfahren nach Anspruch 1, **dadurch gekennzeichnet, dass** bei dem Schritt h) der Vergleich des extrahierten Teiles in Bezug auf einen bekannten Wert durchgeführt wird, der gleich einem extrahierten Teil des zweiten Füllwertes (PAD2) ist.

6. Verfahren nach Anspruch 1, **dadurch gekennzeichnet, dass** die Größe des durch den Marker (Mc) und durch den ersten oder zweiten Füllwert (PAD1; PAD2) gebildeten Kennzeichnungsblockes gleich einer Größe ist, die mit einem in dem Verfahren verwendeten blockweisen Verschlüsselungsalgorithmus kompatibel ist.

7. Verfahren nach Anspruch 1, **dadurch gekennzeichnet, dass** der von dem entschlüsselten gemischten Kennzeichnungsblock extrahierte Teil (MK1) eine der Größe des Markers (Mc) entsprechende Größe hat.

8. Verfahren nach Anspruch 1, **dadurch gekennzeichnet, dass** es weiterhin die folgenden Schritte aufweist:
- Erzeugen eines ersten Kennzeichnungsblockes, der zum einen den Marker (Mc) und zum anderen einen ersten Füllwert (PAD1) aufweist,
- Verschlüsseln des Kennzeichnungsblockes mit dem ersten Schlüssel (K1),
- Extrahieren eines ersten verschlüsselten Kennzeichnungswertes (MK1) des verschlüsselten Kennzeichnungsblockes,
- in dem Datenpaket (DP) Ersetzen des Markers (Mc) durch den Teil (MK1) des verschlüsselten Kennzeichnungsblockes, der aus diesem Block extrahiert worden ist, wobei dieser Teil verschlüsselter Kennzeichnungswert genannt wird, und wobei das Ergebnis dieser Ersetzung verschlüsselter Datenblock genannt wird,
- Erzeugen eines Entschlüsselungsblockes, der wenigstens zum einen durch den ersten Verschlüsselungsschlüssel (K1) und zum anderen durch das verschlüsselte Füllelement (PADK1) gebildet wird, wobei das verschlüsselte Füllelement durch den verschlüsselten Kennzeichnungsblock gebildet worden ist, aus dem der verschlüsselte Kennzeichnungswert (MK1) gewonnen worden ist.

9. Verfahren nach Anspruch 8, **dadurch gekennzeichnet, dass** der verschlüsselte Datenblock und der Entschlüsselungsblock an wenigstens einen Empfänger übermittelt werden, wobei der Entschlüsselungsblock weiterhin durch einen Übertragungsschlüssel (TK) verschlüsselt worden ist.

10. Entschlüsselungsverfahren nach Anspruch 9, **dadurch gekennzeichnet, dass** es die folgenden Schritte aufweist:
a) Empfang des verschlüsselten Datenblockes sowie des Entschlüsselungsblockes und Entschlüsseln des Entschlüsselungsblockes mittels des Übertragungsschlüssels (TK),
b) Erzeugen des verschlüsselten Kennzeichnungsblockes durch Extrahieren des verschlüsselten Kennzeichnungswertes (MK1), der aus dem verschlüsselten Datenblock stammt, und durch Extrahieren des verschlüsselten Füllelementes (PADK1), das aus dem Entschlüsselungsblock stammt,
c) Entschlüsseln des verschlüsselten Kennzeichnungsblockes mittels eines aktuellen Schlüssels (K1),
d) Extrahieren eines vorbestimmten Teiles des Kennzeichnungsblockes, der während der Entschlüsselung des verschlüsselten Kennzeichnungsblockes erhalten worden ist,
e) Vergleich des vorbestimmten Teiles des Kennzeichnungsblockes mit einem Referenzwert (Mc; PDV2),
f) im Fall der Identität Ersetzen des verschlüsselten Kennzeichnungswertes (MK1) des verschlüsselten Datenblockes durch den Marker (Mc),
g) Extrahieren, Entschlüsseln und Verwenden des Nutzteiles (PL),
h) im Fall einer Abweichung während des Vergleichs Entschlüsseln des verschlüsselten Kennzeichnungsblockes mittels eines nachfolgenden Schlüssels (K2),
i) Extrahieren eines vorbestimmten Teiles des Kennzeichnungsblockes, der während der Entschlüsselung des Kennzeichnungsblockes mit dem neuen Schlüssel (K2) erhalten worden ist,
j) Vergleich dieses Teiles des Kennzeichnungsblockes mit dem Referenzwert (Mc; PDV2),
k) im Fall einer Identität Ersetzen des verschlüsselten Kennzeichnungswertes (MK1) des verschlüsselten Datenblockes durch den Marker (Mc),
l) Extrahieren, Entschlüsseln und Verwenden des Nutzteiles (PL).

11. Verfahren nach Anspruch 10, **dadurch gekennzeichnet, dass** im Fall einer Abweichung nach dem Entschlüsseln mit dem nachfolgenden Schlüssel (K2) eine Fehlermeldung erzeugt wird.

12. Verfahren nach Anspruch 10, **dadurch gekennzeichnet, dass** der Vergleich des extrahierten vorbestimmten Teiles in Bezug auf den Marker (Mc) durchgeführt wird.

13. Verfahren nach Anspruch 10, **dadurch gekennzeichnet, dass** der Vergleich des extrahierten vorbestimmten Teiles in Bezug auf einen bekannten Wert durchgeführt wird, der gleich einem extrahierten Teil des ersten Füllwertes (PAD1) ist.

14. Verfahren nach Anspruch 11, **dadurch gekennzeichnet, dass** die Größe des Blockes, der aus dem verschlüsselten Kennzeichnungsblock extrahiert worden ist, gleich der Größe des Markers (Mc) ist.

15. Verfahren nach Anspruch 1, **dadurch gekennzeichnet, dass** die beiden Schlüssel gespeichert werden, wobei der eine die Funktion des laufenden Schlüssels und der andere die Funktion des nachfolgenden Schlüssels hat.

16. Verfahren nach Anspruch 1, **dadurch gekennzeichnet, dass** mehrere Schlüssel gespeichert und einer Verwendungsreihenfolge zugeordnet sind.
